Europäisches Patentamt

European Patent Office

Office européen des brevets

(19)

(11) Publication number: **0 102 092**

**A1**

(12)

# EUROPEAN PATENT APPLICATION

(21) Application number: 83200764.5

(22) Date of filing: 31.05.83

(51) Int. Cl.³: **C 04 B 31/10**
**C 04 B 35/18**

(30) Priority: 02.06.82 NL 8202225

(43) Date of publication of application:
07.03.84 Bulletin 84/10

(84) Designated Contracting States:
BE DE FR GB NL

(71) Applicant: Mijnster, Anton
P. Zeemanstraat 7
NL-3331 ER Zwijndrecht(NL)

(72) Inventor: Mijnster, Anton
P. Zeemanstraat 7
NL-3331 ER Zwijndrecht(NL)

(54) Artificial stone or filler for the construction industry based on fly-ash.

(57) The manufacture of building materials and additional materials from the components fly-ash and harbour silt whereby the silt serves as the binder of fly-ash. After drying and heating, the result is a nonsolvable product which might be applied as building-stone, aggregate or filter.

The manufacturing of building materials and additional materials from the components fly-ash and harbour silt, or fly-ash and silt separately.

When adding sodium hydroxide (NA.OH) and aluminium powder, a foam-reaction is caused and after being dried and heated this results in a non-dissoluble product which may find its application as a light-weight building stone, an aggregate or a filter.

EP 0 102 092 A1

Croydon Printing Company Ltd

**Fly-ash stone.**

The invention concerns the manufacturing of a product being turned into stone. It comes from fly-ash by which harbour-silt, possibly together with silt, polluted with heavy metals, serves as binder.

The invention deals especially with the manufacturing of a building-stone or a stone for general use, which is broken into the desired gradation, the components being fly-ash and harbour-silt. It might be applicable in road-construction as a foundation-material or as an additional material ( splitt ) in bitumen, in concrete-construction as a substitute for gravel or other alternative volume-increasing additional materials.

Fly-ash is a product which comes from coal-fired power stations and which is separated from combustion-gasses by gaspurificationapparatus. The aluminium and silicon, which fly-ash mainly consists of, give a glassy appearance to it.

Harbour-silt consists of particles which are suspended in water and eventually settle to the bottom of harbours.

The process proceeds upon the following principles: 10 parts of fly-ash and 1, 2, 3 or, if desirable more parts of silt are taken.

These components are thoroughly mixed and at choice subsequently made mouldable by adding water, after which this substance is poured into the desired mould, is pressed or stamped, then is dried and subsequently baked in tempera-tures ranging from $850^{\circ}$ to $1250^{\circ}$ centigrade.

After baking-time the stone can be left in its shape or it can be broken into a desired grain-size which results in for instance a sort of split, gravel or foundation-ma terial.

A mixture of fly-ash and silt is taken or fly-ash and silt are taken separately after which sodium hydroxide ( NA.OH ) and aluminium-powder are added. These components are thoroughly mixed and the combination of water, aluminium-powder and sodium-hydroxide ( NA.OH ) cause a foam-reaction.

Then the mixture is poured or put into the desired mould, dried and baked in temperatures up to $1250^{o}$ centigrade. After baking-time the product can be kept in its existing shape or it can be broken into a desired grain-size.

In this way an ultra-light building-stone or an ultra-light additional material can be obtained.

In case only fly-ash is used the sodium-hydroxide ( NA.OH ) serves as binder as well.

- 3 -

0102092

Claims:

1. The manufacturing of building-materials and additional materials from the components fly-ash and harbour-silt where by the silt serves as the binder of fly-ash. After drying and heating the result is a nonsolvable product which might be applied as building-stone or additional material.

2. The manufacturing of building-materials and additional materials from the components fly-ash and harbour-silt, or fly-ash and silt separately.
When adding sodium-hydroxide ( NA.OH ) and aluminium-powder a foam-reaction is caused and after being dried and heated this results in a non-solvable product which may find its application as a light-weight building-stone or an additional material.

European Patent Office

**EUROPEAN SEARCH REPORT**

Application number

EP 83 20 0764

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 801 262 (A. KARKOWSKI et al.) <br> * Claims 1, 2 * | 1 | C 04 B 31/10 <br> C 04 B 35/18 |
| X | GB-A-1 336 712 (ALBRIGHT & WILSON LTD.) <br> * Claims 1, 2, 6 * | 1 | |
| A | DE-B-1 027 583 (STEINKOHLEN-ELEKTRIZITÄT AG) <br> * Claim 1 * | 1 | |
| A | DE-A- 102 372 (W. HEIMSOTH et al.) <br> * Claim; page 1, column 2, paragraph 5 * | 1 | |
| A | CH-A- 605 464 (CONSOLID AG) <br> * Main claim, subclaim 3; column 1, lines 47-48; column 2, lines 1-2 * | 1 | TECHNICAL FIELDS SEARCHED (Int. Cl. ³) <br><br> C 04 B 21/02 <br> C 04 B 31/10 <br> C 04 B 35/16 <br> C 04 B 35/18 |
| A | GB-A- 981 972 (BRITISH CERAMIC RESEARCH ASSOCIATION) <br> * Claims 1, 3, 6, 7 * | 1,2 | |
| A | Soviet Inventions Illustrated Week D 26, 5 August 1981 Section L02 & SU-A-768782 | 2 | |

The present search report has been drawn up for all claims

| Place of search <br> BERLIN | Date of completion of the search <br> 17-08-1983 | Examiner <br> STROUD J.G. |
|---|---|---|